# EUROPEAN PATENT SPECIFICATION

(11) **EP 3 115 936 B1**
(45) Date of publication and mention of the grant of the patent: **27.02.2019**
(21) Application number: 16178100.0
(22) Date of filing: 06.07.2016
(51) Int. Cl.: G06K 15/02, H04N 1/50

(54) **PRINTING APPARATUS AND PRINTING METHOD**
DRUCKERVORRICHTUNG UND DRUCKVERFAHREN
APPAREIL D'IMPRESSION ET PROCÉDÉ D'IMPRESSION

(30) Priority: 10.07.2015 JP 2015138474
(43) Date of publication of application: 11.01.2017
(73) Proprietor: Seiko Epson Corporation, Tokyo 160-8801 (JP)
(72) Inventor: TERASAWA, Hirofumi, Suwa-shi, Nagano 392-8502 (JP); MORITAKU, Toshimitsu, Suwa-shi, Nagano 392-8502 (JP)
(74) Representative: Miller Sturt Kenyon

(56) References cited:
- EP-A1- 1 167 022
- EP-A1- 2 720 136
- US-A1- 2003 137 698

## Description

### BACKGROUND

### 1. Technical Field

The present invention relates to a printing apparatus and a printing method.

### 2. Related Art

With the progress of innovation of printing technologies in addition to image processing technologies, ink jet printers serving as printing apparatuses have achieved various printing forms through the use of various representation means for making representations on various printing media. As a result, such an ink jet printer has been extensively used in commercial-use, mid-size printers supporting the production of articles, such as posters, signboards, promotion goods, wrapping paper, and clothing articles, and in industrial-use, large-size printers built in production lines for products. With this trend, technologies that enable realization of not only higher-quality printing but also higher-speed printing for the purpose of the increase of productivity have been required.

In response to such a requirement, an image recording apparatus (printing apparatus) is disclosed in JP-A-7-327117. According to this disclosure, this image recording apparatus (printing apparatus) receives image data (printing data) from a host apparatus, and allows a recording head to perform scanning operation to perform recording for each band on the basis of the received image data. This image recording apparatus makes an effective use of memory and any other resource, and reduces the number of handshaking communication operations for the transfer of the image data to reduce a communication time. With this method, the image recording apparatus (printing apparatus) is capable of recording an image at a high speed.

In such an image recording apparatus, disclosed in JP-A-7-327117, however, with the further increase of the size of a printing medium and the increase of the volume of image data due to higher resolution printing, as a result, a situation in which the number of handshaking communication operations is increased and a consequent reduction in the efficiency of printing is likely to occur. Further, for the increase of the volume of image data, even when concurrent processing for the image data process is introduced to increase the processing speed of the image data process, the number of transmission/reception paths through which the handshaking communication operations are performed is increased. With this increased number, as a result, a period of time required to perform the handshaking communication operations is linearly increased, and likewise, a situation in which the efficiency of printing is reduced is likely to occur. For this reason, with respect to a printing apparatus required to perform printing of an image having a larger volume of image data, the need for a new technology that enables further reduction of the period of time required to perform communication for the transfer of the image data has been increased.

EP 1167022 discloses a printing system including a plurality of printing units 30, one for each colour, each comprising an exposure head and a printing mechanism performing printing with plates obtained by the exposure heads. In operation, the server controller transmits separate plate data for each colour to each respective unit controller. The unit controllers then carry out raster image processing of the separate plate data. After the separate plate data has been created, is it transmitted with a completion notice to the server controller. After the server controller has received a completion notice from each unit controller, the server controller outputs a processing execution command to each unit controller, upon which the unit controller transfers the separate plate data to the printing unit and then sends a data transfer processing completion notice to the server controller. Next, the individual unit controller transmits a start command for printing output processing to each printing unit. Subsequently, the printing units execute printing.

### SUMMARY

An advantage of some aspects of the invention is that a printing apparatus and a printing method are provided that further reduce a period of time required to perform processing on printing data to realize higher-speed printing. The printing apparatus is defined in claim 1 and the printing method is defined in claim 3. These printing apparatus and printing method are realized as described in the following application examples and an embodiment described below.

### Application Example 1

According to application example 1, a printing apparatus includes a plurality of printing sections each associated with a corresponding one of printing colors of inks used in the printing apparatus and configured to discharge a corresponding one of the inks onto a printing medium to execute a printing process; a printing medium movement section configured to move the printing medium relatively to the printing sections; a driving controller configured to drive control the printing sections and the printing medium movement section; a plurality of printing data controllers configured to, for each of the printing colors, generate a single-color printing data on a basis of a set of full-color printing data associated with an image, a target of printing, and set a set of printing unit data resulting from dividing the set of single-color printing data, into a corresponding one of the printing sections; and a communication bus forming a bus-shaped network and coupled to the driving controller and the printing data controllers to provide information communication. Further, in order to combine the printing process, executed by the each printing section using the set of printing unit data, to perform the printing of the image, a pair of two sequential processes is repeatedly performed, a prior one of the two sequential processes being a process in which, upon completion of the setting of, for the each printing color, the set of printing unit data into the corresponding one of the printing sections, the printing data controllers transmit a piece of data setting completion information to the driving controller via the communication bus, a subsequent one of the two sequential processes being a process in which, upon receipt of the piece of data setting completion information for each of all of the printing colors from all of the printing data controllers, coupled to the communication bus, the driving controller drive controls the printing sections and the printing medium movement section on a basis of the received piece of data setting completion for the each of all of the printing colors.

In this application example, in order to combine the printing process, executed by the each printing section using the set of printing unit data, to perform the printing of the image, the driving controller performs timing control on the setting of, for the each printing color, the set of printing unit data into the corresponding one of the printing sections, and on the driving control of, by the driving controller, the printing sections and the printing medium movement section. This timing control is performed through the information communication, provided by the communication bus. According to this application example, upon completion of the setting of, for the each printing color, the set of printing unit data into the corresponding one of the printing sections, the printing data controllers transmit a piece of data setting completion information to the driving controller via the communication bus, and upon receipt of the piece of data setting completion information for each of all of the printing colors from all of the printing data controllers, coupled to the communication bus, the driving controller drive controls the printing sections and the printing medium movement section on the basis of the received piece of data setting completion for the each of all of the printing colors. In this way, when the timing control is performed, the handshaking communication, that is, inquiries from the driving control to the individual printing controllers and replies to the inquiries, is not made. For this reason, the reduction of the efficiency of printing processing due to the handshaking communication (for example, due to periods of time for waiting for replies) is eliminated. Further, in the case where the handshaking communication is performed to perform the timing control between the driving controller and the printing sections, the handshaking communication is performed between the driving controller and the plurality of printing sections, that is, between one point and multi-points, and thus, the number of processes for the handshaking communication is linearly increased. According to this application example, since the handshaking communication is not performed, even when the number of the kinds of used inks is increased, the occurrence of a situation in which, with this increase, a processing time is linearly increased is eliminated.

### Application Example 2

In the printing apparatus according to the above application example, a transmission control/Internet protocol (TCP/IP) is employed as a communication protocol for the information communication provided by the communication bus.

Since the TCP/IP is a high-versatility communication protocol, the employment of the TCP/IP enables realization of constituting a printing apparatus more suitably.

### Application Example 3

According to application example 3, a printing method for a printing apparatus includes executing, by each of printing sections each associated with a corresponding one of printing colors of inks used in the printing apparatus, a printing process by discharging a corresponding one of the inks onto a printing medium; moving, by a printing medium movement section, the printing medium relatively to the printing sections; driving control, by a driving controller, the printing sections and the printing medium movement section; for each of the printing colors, generating, by printing data controllers, a single-color printing data on a basis of a set of full-color printing data associated with an image, a target of printing, and setting, by the printing data controllers, a set of printing unit data resulting from dividing the set of single-color printing data, into a corresponding one of the printing sections; and performing information communication between the driving controller and the printing data controllers, via a communication bus forming a bus-shaped network and coupled to the driving controller and the printing data controllers. Further, in order to combine the printing process, executed by the each printing section using the set of printing unit data, to perform the printing of the image, a pair of two sequential processes is repeatedly performed, a prior one of the two sequential processes being a process in which, upon completion of the setting of, for the each printing color, the set of printing unit data into the corresponding one of the printing sections, a piece of data setting completion information is transmitted by the printing data controllers to the driving controller via the communication bus, a subsequent one of the two sequential processes being a process in which, upon receipt of the piece of data setting completion information for each of all of the printing colors from all of the printing data controllers, coupled to the communication bus, driving control of the printing sections and the printing medium movement section is performed by the driving controller on a basis of the received piece of data setting completion for the each of all of the printing colors.

In this application example, in order to combine the printing process, executed by the each printing section using the set of printing unit data, to perform the printing of the image, the driving controller performs timing control on the setting of, for the each printing color, the set of printing unit data into the corresponding one of the printing sections, and on the driving control of, by the driving controller, the printing sections and the printing medium movement section. This timing control is performed through the information communication, via the communication bus. According to this application example, upon completion of the setting of, for the each printing color, the set of printing unit data into the corresponding one of the printing sections, the printing data controllers transmit a piece of data setting completion information to the driving controller via the communication bus, and upon receipt of the piece of data setting completion information for each of all of the printing colors from all of the printing data controllers, coupled to the communication bus, the driving controller drive controls the printing sections and the printing medium movement section on the basis of the received piece of data setting completion for the each of all of the printing colors. In this way, when the timing control is performed, the handshaking communication, that is, inquiries from the driving control to the individual printing controllers and replies to the inquiries, is not made. For this reason, the reduction of the efficiency of printing processing due to the handshaking communication (for example, due to periods of time for waiting for replies) is eliminated. Further, in the case where the handshaking communication is performed to perform the timing control between the driving controller and the printing sections, the handshaking communication is performed between the driving controller and the plurality of printing sections, that is, between one point between multi-points, and thus, the number of processes for the handshaking communication is linearly increased. According to this application example, since the handshaking communication is not performed, even when the number of the kinds of used inks is increased, the occurrence of a situation in which, with this increase, a processing time is linearly increased is eliminated.

### BRIEF DESCRIPTION OF THE DRAWINGS

Embodiments of the invention will now be described by way of example only with reference to the accompanying drawings, wherein like numbers reference like elements.
Fig. 1 is a front view of a printing system in a conventional technology illustrating the configuration of the printing system including a printing apparatus.
Fig. 2 is a block diagram illustrating the configuration of a printing system including a printing apparatus in a conventional technology.
Fig. 3 is a diagram illustrating processes performed by a printer driver.
Fig. 4 is a plan view of a printing head illustrating the configuration of the printing head.
Fig. 5 is a front view of a printing system according to embodiment 1 illustrating the configuration of the printing system including a printing apparatus.
Fig. 6 is a block diagram of a printing system including a printing apparatus according to embodiment 1.
Fig. 7 is a flowchart illustrating a communication procedure that allows handshaking communication to be performed in information communication for timing control.
Fig. 8 is a flowchart illustrating a communication procedure that does not allow any handshaking communication to be performed in information communication for timing control.

### DESCRIPTION OF EXEMPLARY EMBODIMENTS

Before describing an embodiment obtained by embodying the invention, first, an example based on a conventional technology will be described below with reference to some of the drawings. In addition, in the following figures, in order to make it easier to understand the illustration, drawing scales may be different from actual scales. Further, with respect to coordinates appended in some of the following figures, a Z-axis direction corresponds to an upward and downward direction; a +Z direction corresponds to an upward direction; a Y-axis direction corresponds to a frontward and backward direction; a +Y direction corresponds to a frontward direction; an X-axis direction corresponds to a leftward and rightward direction; a +X direction corresponds to a leftward direction; and an X-Y plane corresponds to a horizontal plane.

### Printing System in Conventional Technology

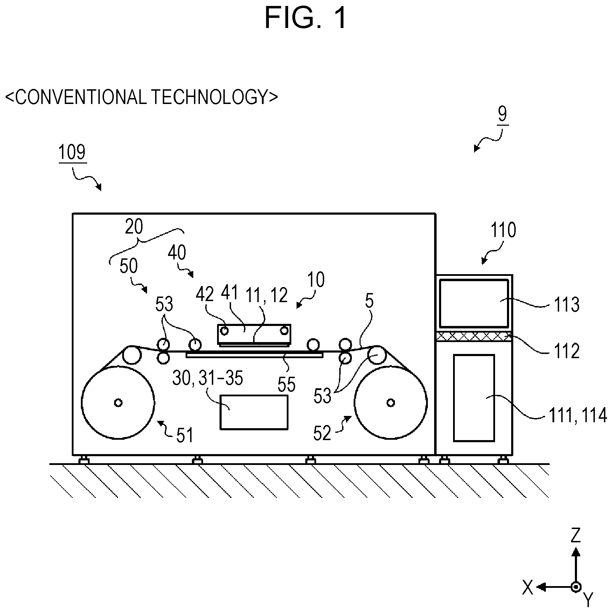

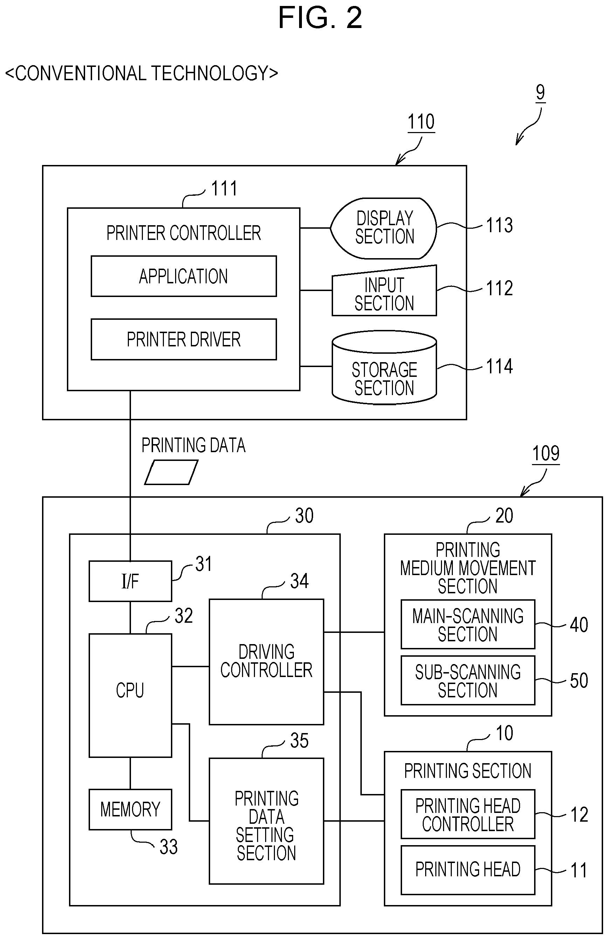

Fig. 1 is a front view of a printing system 9, a printing system in a conventional technology, illustrating the configuration of the printing system 9 including a printing apparatus 109. Fig. 2 is a block diagram of the printing system 9.

The printing system 9 includes the printing apparatus 109 and a personal computer 110 (hereinafter referred to as a PC 110). The personal computer 110 is coupled with the printing apparatus 109. The printing apparatus 109 is an ink jet printer configured to execute printing of a desired printing image (hereinafter also referred to as just an image) on a printing medium 5, having a long size and supplied in a wound, roll-shaped state, on the basis of printing data received from the PC 110.

### Personal Computer (PC 110)

The PC 110 includes a printer controller 111, an input section 112, a display section 113, a storage section 114, and any other section, and controls a print job in accordance with which the printing apparatus 109 executes printing.

The printer controller 111 includes a CPU (arithmetic operation unit) and storage media, such as RAM and ROM, (these components being omitted from illustration), and performs concentrated management of the entire printing system 9.

The input section 112 corresponds to information input means serving as human interfaces, and specifically corresponds to ports to which information input devices, such as a keyboard, are coupled.

The display section 113 corresponds to an information display means (display) serving as a human interface, and displays thereon information input from the input section 112, images to be printed by the printing apparatus 109, information in relation to a print job, and any other kind of information.

The storage section 114 corresponds to rewritable storage media, such as a hard disc drive (HDD) and a memory card, and stores therein software executed by the PC 110 (i.e., programs executed by the printer controller 111), images to be printed, information in relation to a print job, and any other information.

The software executed by the PC 110 includes general image processing application software (hereinafter referred to as an application) and printer driver software (hereinafter referred to as a printer driver).

### Basic Configuration of Printing Apparatus 109

The printing apparatus 109 includes a printing section 10, a printing medium movement section 20, a controller 30, and any other section. Upon receipt of printing data from the PC 110, the printing apparatus 109 allows the controller 30 to control the printing medium movement section 20 to execute printing of an image (forming of an image) onto the printing medium 5.

The printing data is data for use in forming an image, and is data having been subjected to processing for converting general RGB digital image information obtained through, for example, a digital camera into data printable by the application and the printer driver, which are installed in the PC 110. The printing data includes commands for controlling the printing apparatus 109.

The printing section 10 includes a printing head 11, a printing head controller 12, and any other component.

The printing medium movement section 20 includes a main-scanning section 40, a sub-scanning section 50 and any other section. The main-scanning section 40 includes a carriage 41, a guide shaft 42, a carriage motor (omitted from illustration), and any other component. The sub-scanning section 50 includes a feed section 51, a container section 52, transport rollers 53, a platen 55, and any other component.

The printing head 11 includes a plurality of nozzles (nozzle rows) through which printing inks (hereinafter referred to as inks) are ejected in the form of liquid droplets (hereinafter also referred to as ink droplets). The printing head 11 is mounted in the carriage 41 and reciprocates in a scanning direction (the Y-axis direction shown in Fig. 1) with the carriage 41, which moves in the scanning direction. While moving in the scanning direction, the printing head 11 ejects ink droplets onto the printing medium 5, supported by the platen 55, under the control of the controller 30, and as a result, dot rows (raster lines) along the scanning direction are formed on the printing medium 5.

Non-limiting examples of the inks include, as an ink set of high-density ink compositions, an ink set of four color inks obtained by adding a black (K) ink to an ink set of three color inks consisting of a cyan (C) ink, a magenta (M) ink, and a yellow (Y) ink, and also include, as an ink set consisting of high-density ink compositions and low-density ink compositions each obtained by reducing a corresponding one of the high-density ink compositions, an ink set of eight color inks consisting of, in addition to the above four colors, a light-cyan (Lc) ink, a light-magenta (Lm) ink, a light-yellow (Ly) ink, and a light-black (Lk) ink.

In this embodiment, a piezo method is employed as a preferred example of a method for ejecting ink droplets (i.e., an ink jet method). This piezo method is a method that allows a piezoelectric element (a piezo element) to apply a pressure in accordance with a printing information signal to an ink stored in a pressure chamber to allow an ink droplet to be ejected (discharged) through a nozzle communicating with the pressure chamber so as to execute a printing operation.

In addition, the method of discharging ink droplets is not limited to this method but may be a different method that allows liquid-drop shaped inks to be ejected onto a printing medium to allow dot clusters to be formed on the printing medium. Examples of such a different method include, but are not limited to, a method that allows a small pump to apply a pressure to an ink and allows a liquid crystal vibrator or any other vibrator to mechanically vibrate a nozzle so as to cause an ink droplet to be ejected through the nozzle, and a method that, in accordance with a recording information signal, allows a minute electrode to heat an ink to cause a bubble to be formed in the ink to cause an ink droplet to be ejected so as to allow a recording operation to be executed (this method being called a thermal jet method).

The printing medium movement section 20 (including the main-scanning section 40 and the sub-scanning section 50) allows the printing medium 5 to move relatively to the printing section 10 under the control of the controller 30.

The guide shaft 42 extends in the scanning direction and supports the carriage 41 in a state in which the carriage 41 is slidably in contact with the guide shaft 42. The carriage motor is a drive source for allowing the carriage 41 to reciprocate along the guide shaft 42. That is, the main-scanning section 40 (including the carriage 41, the guide shaft 42, and the carriage motor) allows the carriage 41 (i.e., the printing head 11) to move in the scanning direction, along the guide shaft 42, under the control of the controller 30.

The feed section 51 supports a reel around which the printing medium 5 is wound in a roll shape, in a way that allows the reel to freely rotate, and feeds out the printing medium 5 to a transport path. The container section 52 supports a reel for winding the printing medium 5, in a way that allows the reel to freely rotate, and winds up the recording medium 5, having been subjected to printing, from the transport path.

The transport rollers 53 include a drive roller configured to move the printing medium 5 in a sub-scanning direction (i.e., the X-axis direction shown in Fig. 1) intersecting with the main-scanning direction, a driven roller configured to rotate in conjunction with the movement of the printing medium 5, and any other component. Further, the transport rollers 53 form a transport path along which the printing medium 5 is transported from the feed section 51 to the container section 52 via a printing region of the printing section 10. This printing region is a region which is located on the upper surface of the platen 55 and above which the printing head 11 moves during a scanning operation.

The controller 30 includes an interface section 31, a CPU 32, a memory 33, a driving controller 34, a printing data setting section 35, and any other section, and controls the printing apparatus 109.

The interface section 31 performs data transmission/reception between the PC 110 and the printing apparatus 109.

The CPU 32 is an arithmetic processing device for controlling the entire printing apparatus 109.

The memory 33 is a storage medium that retains an area for storing therein programs executed by the CPU 32, a work area for use in the execution of the programs, and any other area, and is constituted by memory elements, such as RAM and EEPROM.

The CPU 32 is configured to, via the driving controller 34, control the printing medium movement section 20 (the main-scanning section 40 and the sub-scanning section 50) and the printing portion 10 (the printing head 11) in accordance with the programs stored in the memory 33 and printing data received from the PC 110 and stored in the memory 33, and further, the CPU 32 is configured to, via the printing data setting section 35, sequentially transmit raster data described below to the printing head controller 12 on the basis of the printing data stored in the memory 33.

### Basic Function of Printer Driver

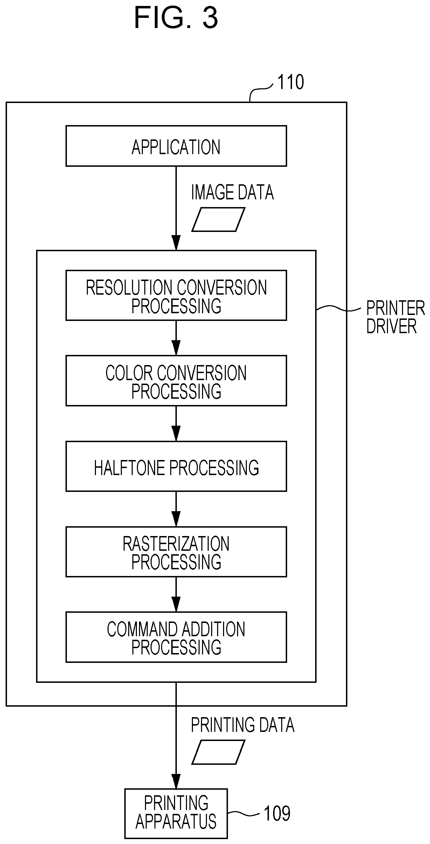

Printing onto the printing medium 5 is started upon transmission of a set of printing data from the PC 110 coupled to the printing apparatus 109. The set of printing data is generated by the printer driver. Hereinafter, processes by the printer driver will be described referring to Fig. 3. Fig. 3 is a diagram illustrating processes performed by the printer driver.

Upon receipt of a set of image data, such as a set of text data or a set of full-color image data, from an application, the printer driver converts the set of image data into a set of printing data having a format interpretable by the printing apparatus 109, and outputs the set of printing data to the printing apparatus 109. When converting the set of image data from the application into the set of printing data, the printing driver performs resolution conversion processing, color conversion processing, halftone processing, rasterization processing, command addition processing, and any other processing.

The resolution conversion processing is processing for converting the resolution of the set of image data output from the application into a resolution (a printing resolution) at which printing is to be executed onto the printing medium 5. For example, when a printing resolution of 720 × 720 dpi is specified, the resolution conversion processing converts a set of image data having been received from the application and having a vector format into a set of image data having a bit map format and having a resolution of 720 × 720 dpi. The set of image data after the resolution conversion processing is composed of pieces of pixel data each associated with a corresponding one of pixels arranged in a matrix shape. Each of the pixels has a combination of grayscale levels each being one of, for example, 256 grayscale levels in a corresponding one of RGB-color spaces. That is, each piece of image data constituting the set of image data after the resolution conversion processing indicates a combination of grayscale levels that is associated with a corresponding pixel.

A block of pieces of image data each associated with a corresponding one of pixels forming one row and arranged in a predetermined direction among the pixels arranged in the matrix shape is called a block of raster data. In addition, the predetermined direction, in which the pixels forming one row and associated with a block of raster data are arranged, corresponds to the movement direction (the scanning direction), in which the printing head 11 moves when an image is printed.

The color conversion processing is processing for converting RGB data into data in spaces of a CMYK-color system. The CMYK color corresponds to cyan (C), magenta (M), yellow (Y), and black (K), and a set of image data in the spaces of the CMYK-color system is a set of data corresponding to the colors of inks included in the printing apparatus 109. Thus, for example, when the printing apparatus 109 uses ten kinds of inks in the CMYK-color system, the printer driver generates a set of image data in ten-dimensional spaces of the CMYK-color system.

The color conversion processing is performed on the basis of a table (a color-conversion lookup table LUT) in which each of grayscale levels for RGB data is associated with a corresponding one of grayscale levels for CMYK-color system data. In addition, a piece of image data after the color conversion processing is a piece of CMYK-color system data represented by the spaces of the CMYK-color system and having a combination of grayscale levels each being one of, for example, 256 grayscale levels in a corresponding one of the spaces of the CMYK-color system.

The halftone processing is processing for converting a set of image data based on a high grayscale level (256 grayscale levels) into a set of data based on a grayscale level that is low enough for the formation by the printing apparatus 109. Through the halftone processing, each piece of data indicating a combination of grayscale levels each being one of the 256 grayscale levels is converted into a piece of data indicating a combination of grayscale levels each being one of two grayscale levels represented by one bit of data, or a combination of grayscale levels each being one of four grayscale levels represented by two bits of data. A set of image data after the halftone processing is a set of data based on image data represented by one bit or two bits of data, and this set of data becomes a set of pieces of data each indicating a formation of a dot corresponding to each pixel (i.e., indicating the presence or absence of a dot or the size of a dot).

For example, in the case where each piece of image data is composed of two bits (indicating four grayscales), the formation of a corresponding dot is converted into one of four stages: a first one being a stage corresponding to a grayscale level [00] and indicating the formation of no dot; a second one being a stage corresponding to a grayscale level [01] and indicating the formation of a small-size dot; a third one being a stage corresponding to a grayscale level [10] and indicating the formation of a middle-size dot; and a fourth one being a stage corresponding to a grayscale level [11] and indicating the formation of a large-size dot. Subsequently, the printer driver determines a dot generation ratio for each of the dot sizes, and then, generates a set of image data using a dither method or an error diffusion method to allow the printing apparatus 109 to form dots so as to allow the dots to be dispersed.

The rasterization processing is processing for rearranging pieces of image data arranged in a matrix shape, in accordance with dot formation order in a printing execution. For example when, in a printing execution, some dot formation processes resulting from dividing dot formation processing are performed, sets of image data each associated with a corresponding one of the dot formation processes are extracted, and pieces of image data constituting each of the sets of image data are rearranged in accordance with the dot formation order. In addition, the dot formation order in a printing execution differs depending on the kind of printing method, and thus, the rasterization processing is performed in accordance with the kind of printing method.

The command addition processing is processing for adding command data to a set of data having been subjected to the rasterization processing. A non-limiting example of the command data includes transportation data specifying a transportation speed of a medium.

A set of printing data having been generated through the above pieces of processing is transmitted to the printing apparatus 109 by the printer driver.

### Embodiment 1

Next, one embodiment resulting from embodying the invention will be described. The following is just an embodiment of the invention, and does not limit the invention. In addition, in the following description, the same constituent elements as those of the foregoing example, in the conventional technology, will be denoted by the same reference signs as those in the foregoing example, and duplicated description thereof will be omitted.

First, the printing head 11 in this embodiment will be described.

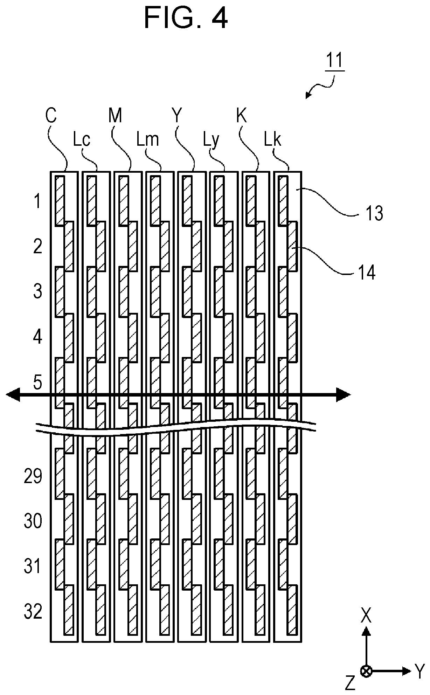

Fig. 4 is a plan view of the printing head 11 illustrating the configuration of the printing head 11.

The printing head 11 is constituted as an aggregate obtained by binding up eight ink discharging heads 13 in the scanning direction (the Y-axis direction). Each of the eight ink discharging heads 13 is associated with a corresponding one of the above eight colors, cyan (C), magenta (M), yellow (Y), black (K), light cyan (Lc), light magenta (Lm), light yellow (Ly), and light black (Lk).

Each of the ink discharging heads 13 includes thirty two nozzle chips 14. The nozzle chips 14 are arranged in a zig-zag shape so as to form two rows extending in the X-axis direction.

Each of the nozzle chips 14 includes two rows each consisting of 400 through-hole shaped nozzles that are formed at intervals of 1/360 inches.

This configuration enables the printing head 11 to form 25000 dots colored in each of the eight colors and arranged at pitches of 1/720 inches (i.e., 720 dpi) in the sub-scanning direction (the X-axis direction).

For example when the printing head 11 performs 20000 ink discharging operations at 720 dpi through each nozzle during one single-direction movement in the scanning direction (hereinafter referred to as one pass), as a result, up to four billion (= 25000 × 8 × 20000) dots per pass are formed.

The printing apparatus 109 repeats a pass that allows the inks to be discharged in accordance with raster data based on printing data having been generated from image data to form an image corresponding to the image data on the printing medium 5.

Here, a set of pieces of raster data used for a printing execution for each pass is referred to as a block of printing unit data. When the 20000 ink discharging operations through each nozzle are performed during one pass, a minimum unit of pieces of raster data constituting a block of printing unit data corresponds to four billion (= 25000 × 8 × 20000) dots, and these pieces of raster data are sequentially transmitted from the controller 30 to a buffer memory included in the printing head controller 12. In addition, pieces of raster data corresponding to a plurality of passes may be handled as a block of printing unit data depending on the capacity of the buffer memory included in the printing head controller 12 (that is, in the case where the buffer memory included in the printing head controller 12 has a capacity enough to store such pieces of raster data corresponding to a plurality of passes).

As described above, a huge volume of data is required to be processed in execution of printing, and thus, in the printing apparatus 109 (in the printing method in the conventional technology), depending on the size and the resolution of an image to be printed, a period of time required to generate each block of printing unit data that is associated with dots per one pass, and set the generated each block of printing unit data into the printing section 10 may be longer than a period of time required to execute printing during one pass (i.e., the sum of a period of time required to allow the printing head 11 to perform scanning operation during one pass and a period of time required to move the printing medium 5 in the sub-scanning direction by a predetermined amount). As a result, a period of waiting time between succeeding passes is made longer, and this long period of waiting time may adversely affect the quality of printing and/or may make a period of printing time longer than a desired time.

In contrast, this embodiment is configured such that the processing for generating and setting each block of printing unit data is distributed into a plurality of distributed processes that are concurrently executed, preferably so as not to make a period of time required to set the each block of printing unit data longer than a period of time required to perform the scanning operation by the printing head 11 during one pass. The period of time required to set the each block of printing unit data is the sum of a period of time required to allow the each block of printing unit data to be distributed to and subjected to the plurality of distributed processes, and a period of time required to perform a process of causing the timing points of the plurality distributed processes to coincide with one another.

Hereinafter, specific description will be made.

### Printing System in Embodiment 1

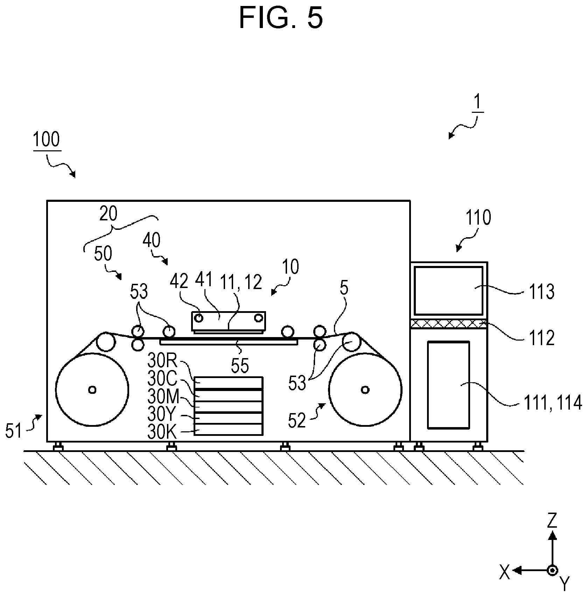

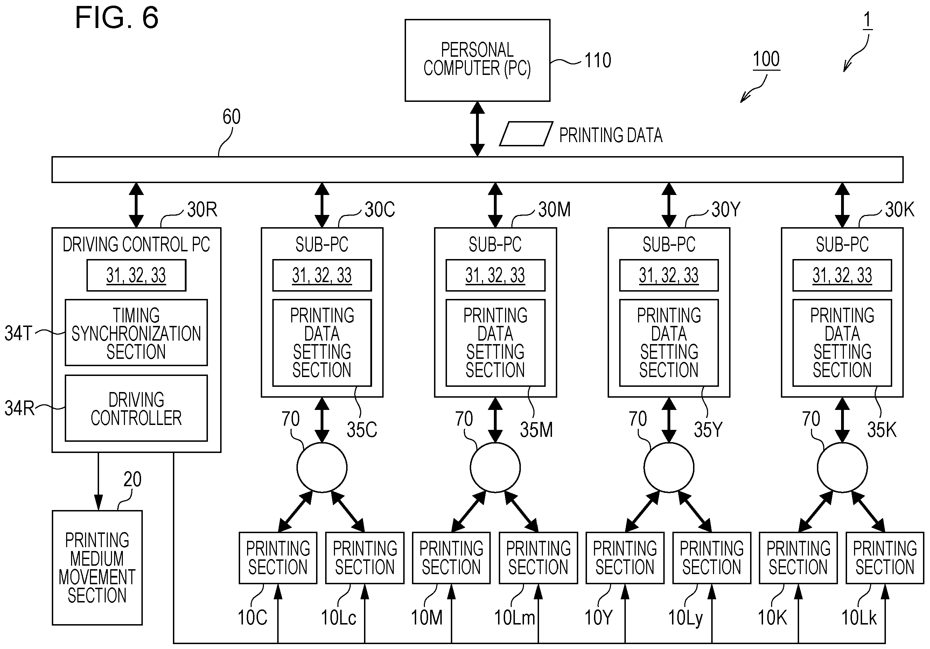

Fig. 5 is a front view of a printing system 1, a printing system according to embodiment 1, illustrating the configuration of the printing system 1 including a printing apparatus 100. Fig. 6 is a block diagram of the printing system 1.

The printing system 1 includes the printing apparatus 100 and a personal computer 110. The personal computer 110 is coupled to the printing apparatus 100.

The printing apparatus 100 is configured to, in order to reduce a period of time required to generate each block of printing unit data from a set of printing data received from the PC 110 and set the each block of printing unit data into the printing section 10, included in the printing apparatus 109, distribute the function of the controller 30, included in the printing apparatus 109, into five personal computers (hereinafter referred to as sub-PCs).

Further, the printing section 10, which receives the generated block of printing unit data, is divided into a plurality of printing sections each associated with a corresponding one of kinds of used inks to allow the plurality of printing sections to receive the generated blocks of printing unit data independently from one another. The plurality of printing sections include a printing section 10C, a printing section 10M, a printing section 10Y, a printing section 10K, a printing section 10Lc, a printing section 10Lm, a printing section 10Ly, and a printing section 10Lk, and these printing portions will be also collectively referred to as printing sections 10C to 10Lk hereinafter. Each of the printing sections 10C to 10Lk includes an ink discharging head 13, from which a corresponding one of color inks is discharged, a corresponding one of a plurality of printing head controllers (omitted from illustration), and any other component. The plurality of printing head controllers include a printing head controller 12C, a printing head controller 12M, a printing head controller 12Y, a printing head controller 12K, a printing head controller 12Lc, a printing head controller 12Lm, a printing head controller 12Ly, and a printing head controller 12Lk, and these printing head controllers will be also collectively referred to as printing head controllers 12C to 12Lk hereinafter.

The five sub-PCs, which perform distributed processes, include a driving control PC 30R, a sub-PC 30C, a sub-PC 30M, a sub-PC 30Y, and a sub-PC 30K.

Each of the sub-PCs includes an interface section 31, a CPU 32, and a memory 33, just like the controller 30, and is coupled to the PC 110 via the interface section 31 and a communication bus 60, the communication bus forming a bus topology network. For a communication protocol for use in coupling to the communication bus 60, a transmission control protocol/Internet protocol (TCP/IP) is employed.

The driving control PC 30R is a sub-PC serving as a "driving controller" in the invention, and having the same function as that of the driving controller 34, included in the printing apparatus 109, and includes a driving controller 34R and a timing synchronization section 34T.

The timing synchronization section 34T has the function of synchronizing the processes, which are distributed to the respective five sub-PCs, and notifying the result of the synchronization to the driving controller 34R.

The driving controller 34R controls a printing medium movement section 20 (i.e., a main-scanning section 40 and a sub-scanning section 50) and the printing sections 10C to 10Lk in accordance with the notification from the timing synchronization section 34T, the set of printing data received from the PC 110, and any other information.

The sub-PC 30C, the sub-PC 30M, the sub-PC 30Y, and the sub-PC 30K (these being also collectively referred to as sub-PCs 30C to 30K hereinafter) each correspond to a "printing data controller" in the invention, and respectively include a printing data setting section 35C, a printing data setting section 35M, a printing data setting section 35Y, and a printing data setting section 35K (these being also collectively referred to as printing data setting sections 35C to 35K hereinafter).

In the conventional printing apparatus 109, the controller 30 processes the set of printing data, in eight dimensional spaces of the CMYK-color system, each of the eight dimensional spaces being associated with a corresponding one of the eight color inks, and then, sequentially transmits the data set of raster data (i.e., the block of printing unit data) to the printing head controller 12 via the printing data setting section 35; while, in the printing apparatus 100 of the present invention, processing target colors are allocated to each of the sub-PCs 30C to 30K, each serving as a "printing data controller" in the invention. Specifically, the sub-PC 30C executes processes on cyan (C) and light cyan (Lc); the sub-PC 30M executes processes on magenta (M) and light magenta (LM); the sub-PC 30Y executes processes on yellow (Y) and light yellow (Ly); and the sub-PC 30K executes processes on black (K) and light black (Lk).

Further, the sub-PC 30C, the sub-PC 30M, the sub-PC 30Y, and the sub-PC 30K are respectively coupled to a pair of the printing section 10C and the printing section 10Lc, a pair of the printing section 10M and the printing section 10Lm, a pair of the printing section 10Y and the printing section 10Ly, and a pair of the printing section 10K and the printing section 10Lk. Moreover, each of the sub-PCs 30C to 30K is coupled to a corresponding one of the pairs of printing sections via a corresponding one of high-speed communication interfaces 70, such as StarFabric interfaces.

Each of the sub-PCs 30C to 30K extracts corresponding sets of allocated-color data from the set of printing data, having been received from the PC 110 via the communication bus 60, and then, performs processing on the extracted sets of allocated-color data. Specifically, each of the sub-PCs 30C to 30K extracts corresponding sets of allocated-color data from the set of printing data to generate sets of single-color printing data each associated with a corresponding one of the allocated colors, and then, generates sets of raster data from the respective sets of single-color printing data to compose blocks of printing unit data. For example, the sub-PC 30C extracts a set of cyan (C) data and a set of light cyan (Lc) data from the set of printing data to generate a block of printing unit data composed of pieces of cyan (C) raster data and a block of printing unit data composed of pieces of light cyan (Lc) raster data, and then sequentially sets (transmits) each of these two kinds of blocks of printing unit data to a corresponding one of the printing sections 10C and 10Lc via one of the high-speed communication interfaces 70 that is associated with the sub-PC 30C.

In addition, the method of extracting (converting) the set of allocated-color printing data from the set of full-color printing data is not limited to the above method, in which the extraction is performed by each of the sub-PCs 30C to 30K, but, for example, a method in which the extraction is performed by the PC 110 may be employed. In such a method, a set of printing data transmitted from the PC 110 to each of the sub-PCs 30C to 30K is not a set of full-color printing data, but a set of printing data having been preliminarily converted by the PC 110 so as to allow the converted set of printing data to be associated with colors allocated to the each of the sub-PCs 30C to 30K.

In the case where, as described above, separately generated blocks of printing unit data are each set (transmitted) to a corresponding one of the printing sections 10C to 10Lk, the timing points of settings of the blocks of printing unit data are required to be synchronized with the timing point of the driving of the printing medium movement section 20. In this embodiment, this synchronization is made in a manner described below.

When each of the sub-PCs 30C to 30K has completed settings (transmissions) of blocks of allocated-color printing unit data into corresponding ones of the printing sections 10C to 10Lk, the relevant sub-PC 30 transmits a piece of data setting completion information to the driving control PC 30R, serving as the "driving controller" in the invention, via the communication bus 60. The driving control PC 30R refers to the pieces of data setting completion information, having been received in the function of the timing synchronization section 34T.

Each of the pieces of data setting completion information includes information in relation to colors allocated to a corresponding one of the sub-PCs 30C to 30K, the range of a setting completed block of printing unit data (i.e., the range of a setting completed pass), and any other information. One sub-PC 30C to 30K may provide a separate piece of data setting completion information for each color, or a single piece of data setting completion information for both (or a subset or all) the colors it is responsible for. The claims of the present application should be construed accordingly.

Upon completion of the receptions of the pieces of data setting completion information from all of the sub-PCs 30C to 30K, coupled to the communication bus 60, that is, substantially upon confirmation of settings of blocks of printing unit data having the same pass range and corresponding to all of the respective colors into the printing portions 10C to 10Lk, the timing synchronization section 34T notifies this confirmation result to the driving controller 34R.

The driving controller 34R drive controls the printing sections 10C to 10Lk and the printing medium movement section 20 on the basis of the notification.

In this way, in the information communication, through which the timing control between the driving control PC 30R and each of the sub-PCs 30C to 30K is performed, any handshaking communication operation is not performed. That is, while a pair of the setting of a block of printing unit data and the driving of the printing medium movement section 20 is repeated (that is, while printing is executed), any information inquiry from the driving control PC 30R to each of the sub-PCs 30C to 30K is not made.

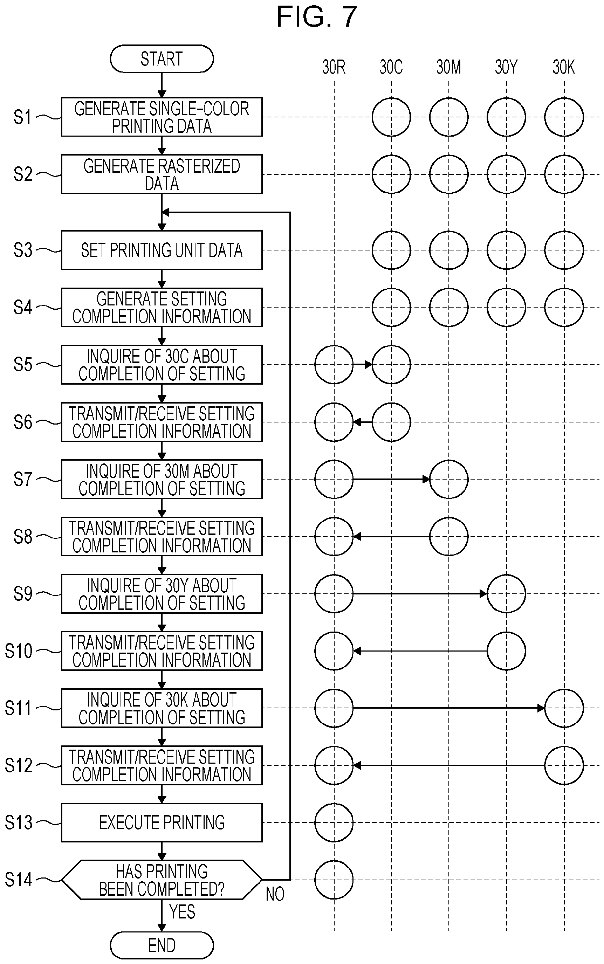

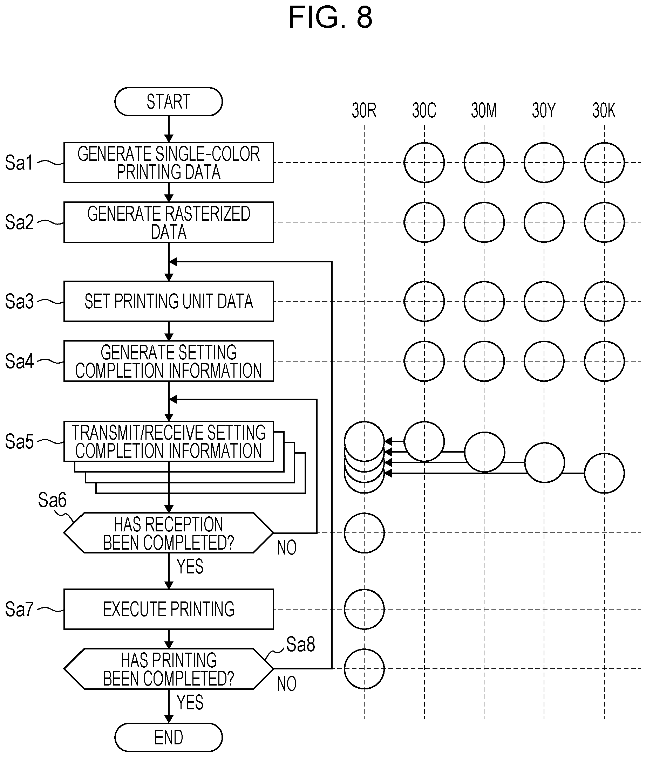

Fig. 7 is a flowchart illustrating a communication procedure that allows handshaking communication to be made in information communication for timing control; while Fig. 8 is a flowchart illustrating a communication procedure that does not allow any handshaking communication to be made in the information communication for timing control.

As clearly understood from the comparison between Fig. 7 and Fig. 8, since any handshaking communication operation is not performed in this embodiment, periods of time spent in inquiry operations and waiting operations for waiting for replies thereto in the handshaking communication operations are reduced. Further, even when the number of the kinds of used inks is increased and, with this increase, the number of divided processes is increased, a situation in which the number of operations of communication with the divided processes is linearly increased because of increased handshaking communication operations does not occur.

Moreover, information (command data and control information based thereon) involved in each of three kinds of data or information, that is, the block of printing unit data, the piece of data setting completion information transmitted from each of the sub-PCs 30C to 30K, and the notification, which is transmitted upon completion of the receptions of the pieces of data setting completion information, makes it possible to make the driving control by the driving controller 34R on the printing sections 10C to 10Lk and the printing medium movement section 20 more suitable.

Examples of a command indicated by such an involved piece of command data include, but are not limited to, a command for instructing the execution of flushing for eliminating the clogging of target nozzles, and a command for instructing the execution of a nozzle analysis (i.e., an analysis of a signal for detecting the discharging status of a target ink). The timing of the execution of each of these operations on each of the inks can be made suitable in accordance with the characteristic and/or the discharge frequency of the relevant ink. This suitable timing of the execution of each of the operations can be realized, for each of the inks, by, upon completion of generating a block of printing unit data at a suitable timing point for the execution of the relevant operation, involving a command for instructing the execute of the relevant operation into the generated block of printing unit data.

When one the sub-PCs 30C to 30K has found that such a command is included in a corresponding block of printing unit having been set (transmitted), the relevant sub-PC 30 involves the command into a piece of data setting completion information, and then transmits the piece of data setting completion, involving the command, to the driving control PC 30R. The timing synchronization section 34T consolidates pieces of command data included in collected pieces of data setting completion data, and then notifies the consolidated command data to the driving controller 34R. The driving controller 34R drive controls, in accordance with this notification, each of corresponding one or more of the printing sections 10C to 10Lk and the printing medium movement section 20 to allow, for example, a required flushing operation and/or a required nozzle analysis operation to be executed.

As described above, the printing apparatus and the printing method according to this embodiment bring about the following advantageous effects.

In this embodiment, in order to combine printing processes using blocks of printing unit data to perform printing of a printing target image, the driving control PC 30R, serving as the "driving controller" in the invention, performs timing control on the timings of the settings (transmissions) of the blocks of printing unit data to the respective printing sections 10C to 10Lk and on the timings of the driving controls by the driving control PC 30R on the printing sections 10C to 10Lk and the printing medium movement section 20. This timing control is performed through information communication provided by the communication bus 60. Specifically, each of the sub-PCs 30C to 30K is configured to, upon completion of settings (transmissions) of blocks of printing unit data each associated with a corresponding one of colors allocated to the relevant sub-PC 30 into printing sections each included in the printing sections 10C to 10Lk and associated with the corresponding one of the colors, allocated to the relevant sub-PC 30, transmit a piece of data setting completion information to the driving control PC 30R, serving as the "driving controller" in the invention, via the communication bus 60. Upon completion of the receptions of the pieces of setting completion information from all of the sub-PCs 30C to 30K, coupled to the communication bus 60, the driving control PC 30R (the timing synchronization section 34T) drive controls the printing sections 10C to 10Lk and the printing medium movement section 20 on the basis of the received pieces of data setting completion information. That is, according to this embodiment, in the information communication through which this timing control is performed, any handshaking communication operation is not performed between the driving control PC 30R and each of the sub-PCs 30C to 30K. Thus, periods of time spent in inquiry operations and waiting operations for waiting for replies thereto in the handshaking communication operations are reduced and, as a result, the reduction of the efficiency of printing processing is eliminated. Further, even when the number of the kinds of used inks is increased and, with this increase, the number of divided processes is caused to be increased, a situation in which the number of operations of communication with the divided processes is linearly increased because of increased handshaking communication operations does not occur, and thus, the establishment of a printing system is facilitated to a greater degree.

Further, the TCP/IP is employed as a communication protocol for communication made via the communication bus 60. Since the TCP/IP is a high-versatility communication protocol, the employment of the TCP/IP enables realization of constituting a printing apparatus more suitably, and thus, facilitates the change of the installation locations of the driving control PC 30R and the sub-PCs 30C to 30K, and the customization of the printing-data processing ability in accordance with a required printing speed by means of additionally installing one or more sub-PCs.

Although, in this embodiment, the number of colors allocated to distributed color processes by each of the sub-PCs 30C to 30K is two, the number of allocated colors (the number of distributed color processes resulting from dividing color processing) is not limited to this number, two. For example, a configuration that allows each of sub-PCs 30x to be coupled to a corresponding one (or three or more) of printing sections 10x, and allows the each of sub-PCs 30x to execute single-color (or triple- or more color) processing may be employed.

## Claims

1. A printing apparatus (150) comprising:
a plurality of printing sections (10) each associated with a corresponding one of printing colors of inks used in the printing apparatus and configured to discharge a corresponding one of the inks onto a printing medium (5) to execute a printing process;
a printing medium movement section (20) configured to move the printing medium relatively to the printing sections;
a driving controller (30R) configured to drive control the printing sections and the printing medium movement section;
a plurality of printing data controllers (30C-30K) configured to, for each of the printing colors, generate a single-color printing data on a basis of a set of full-color printing data associated with an image, a target of printing, and set a set of printing unit data resulting from dividing the set of single-color printing data, into a corresponding one of the printing sections; and
a communication bus (60) coupled to the driving controller and the printing data controllers to provide information communication,
**characterised in that**, in order to combine the printing process, executed by the each printing section using the set of printing unit data, to perform the printing of the image, a pair of two sequential processes is repeatedly performed, a prior one of the two sequential processes being a process in which, upon completion of the setting of, for the each printing color, the set of printing unit data into the corresponding one of the printing sections, the printing data controllers transmit a piece of data setting completion information to the driving controller via the communication bus, a subsequent one of the two sequential processes being a process in which, upon receipt of the piece of data setting completion information for each of all of the printing colors from all of the printing data controllers, coupled to the communication bus, the driving controller drive controls the printing sections and the printing medium movement section on a basis of the received piece of data setting completion for the each of all of the printing colors.

2. The printing apparatus according to claim 1, wherein a transmission control/Internet protocol (TCP/IP) is employed as a communication protocol for the information communication provided by the communication bus.

3. A printing method for a printing apparatus (100), comprising:
executing, by each of printing sections (10) each associated with a corresponding one of printing colors of inks used in the printing apparatus, a printing process by discharging a corresponding one of the inks onto a printing medium (5);
moving, by a printing medium movement section (20), the printing medium relatively to the printing sections;
driving control, by a driving controller (30R), the printing sections and the printing medium movement section;
for each of the printing colors, generating, by printing data controllers (30C-30K), a single-color printing data on a basis of a set of full-color printing data associated with an image, a target of printing, and setting, by the printing data controllers, a set of printing unit data resulting from dividing the set of single-color printing data, into a corresponding one of the printing sections; and
performing information communication between the driving controller and the printing data controllers, via a communication bus coupled to the driving controller and the printing data controllers,
**characterised in that**, in order to combine the printing process, executed by the each printing section using the set of printing unit data, to perform the printing of the image, a pair of two sequential processes is repeatedly performed, a prior one of the two sequential processes being a process in which, upon completion of the setting of, for the each printing color, the set of printing unit data into the corresponding one of the printing sections, a piece of data setting completion information is transmitted by the printing data controllers to the driving controller via the communication bus, a subsequent one of the two sequential processes being a process in which, upon receipt of the piece of data setting completion information for each of all of the printing colors from all of the printing data controllers, coupled to the communication bus, driving control of the printing sections and the printing medium movement section is performed by the driving controller on a basis of the received piece of data setting completion for the each of all of the printing colors.

## Patentansprüche

1. Druckvorrichtung (150), umfassend:
eine Vielzahl von Druckabschnitten (10), die jeweils mit einer entsprechenden von Druckfarben von Tinten verknüpft sind, die in der Druckvorrichtung verwendet werden, und konfiguriert sind, eine entsprechende der Tinten auf ein Druckmedium (5) abzugeben, um einen Druckvorgang auszuführen;
einen Druckmediumbewegungsabschnitt (20), der konfiguriert ist, das Druckmedium relativ zu den Druckabschnitten zu bewegen;
eine Antriebssteuerung (30R), die konfiguriert ist, die Steuerung der Druckabschnitte und des Druckmediumbewegungsabschnitts anzutreiben;
eine Vielzahl von Druckdatensteuerungen (30C-30K), die konfiguriert sind, für jede der Druckfarben Einzelfarbendruckdaten auf einer Basis eines Satzes von Vollfarbendruckdaten, der mit einem Bild verknüpft ist, eines Druckziels zu erzeugen und einen Satz von Druckeinheitsdaten, die aus einer Teilung des Satzes von Einzelfarbendruckdaten resultieren, in einem entsprechenden der Druckabschnitte einzustellen; und
einen Kommunikationsbus (60), der an die Antriebssteuerung und die Druckdatensteuerungen gekoppelt ist, um eine Informationskommunikation bereitzustellen,
**dadurch gekennzeichnet, dass**, um den Druckvorgang zu kombinieren, der durch jeden Druckabschnitt unter Verwendung des Satzes von Druckeinheitsdaten ausgeführt wird, um den Druck des Bildes durchzuführen, ein Paar von zwei aufeinanderfolgenden Vorgängen wiederholt durchgeführt wird, wobei ein früherer der zwei aufeinanderfolgenden Vorgänge ein Vorgang ist, in dem, nach Beendigung der Einstellung des Satzes von Druckeinheitsdaten für jede Druckfarbe in dem entsprechenden der Druckabschnitte die Druckdatensteuerungen eine Dateneinstellungsbeendigungsinformation über den Kommunikationsbus an die Antriebssteuerung senden, wobei ein folgender der zwei aufeinanderfolgenden Vorgänge ein Vorgang ist, in dem, nach Empfang der Dateneinstellungsbeendigungsinformation für jede aller Druckfarben von allen Druckdatensteuerungen, die an den Kommunikationsbus gekoppelt sind, die Antriebssteuerung die Druckabschnitte und den Druckmediumbewegungsabschnitt auf Basis der empfangenen Dateneinstellungsbeendigung für jede aller Druckfarben antreibt.

2. Druckvorrichtung nach Anspruch 1, wobei ein Übertragungssteuerungs-/Internetprotokoll (TCP/IP) als Kommunikationsprotokoll für die Informationskommunikation verwendet wird, die durch den Kommunikationsbus bereitgestellt ist.

3. Druckverfahren für eine Druckvorrichtung (100), umfassend:
Ausführen, durch jeden von Druckabschnitten (10), die jeweils mit einer entsprechenden von Druckfarben von Tinten verknüpft sind, die in der Druckvorrichtung verwendet werden, eines Druckvorgangs durch Abgeben einer entsprechenden der Tinten auf ein Druckmedium (5) ;
Bewegen, durch einen Druckmediumbewegungsabschnitt (20), des Druckmediums relativ zu den Druckabschnitten;
Antriebssteuern, durch eine Antriebssteuerung (30R), der Druckabschnitte und des Druckmediumbewegungsabschnitts;
für jede der Druckfarben, Erzeugen, durch Druckdatensteuerungen (30C-30K), von Einzelfarbendruckdaten auf einer Basis eines Satzes von Vollfarbendruckdaten, der mit einem Bild verknüpft ist, eines Druckziels und Einstellen, durch die Druckdatensteuerungen, eines Satzes von Druckeinheitsdaten, die aus einer Teilung des Satzes von Einzelfarbendruckdaten resultieren, in einem entsprechenden der Druckabschnitte; und
Durchführen einer Informationskommunikation zwischen der Antriebssteuerung und den Druckdatensteuerungen über einen Kommunikationsbus, der an die Antriebssteuerung und die Druckdatensteuerungen gekoppelt ist, ,
**dadurch gekennzeichnet, dass**, um den Druckvorgang zu kombinieren, der durch jeden Druckabschnitt unter Verwendung des Satzes von Druckeinheitsdaten ausgeführt wird, um den Druck des Bildes durchzuführen, ein Paar von zwei aufeinanderfolgenden Vorgängen wiederholt durchgeführt wird, wobei ein früherer der zwei aufeinanderfolgenden Vorgänge ein Vorgang ist, in dem, nach Beendigung der Einstellung des Satzes von Druckeinheitsdaten für jede Druckfarbe in dem entsprechenden der Druckabschnitte eine Dateneinstellungsbeendigungsinformation durch die Druckdatensteuerungen über den Kommunikationsbus an die Antriebssteuerung gesendet wird, wobei ein folgender der zwei aufeinanderfolgenden Vorgänge ein Vorgang ist, in dem, nach Empfang der Dateneinstellungsbeendigungsinformation für jede aller Druckfarben von allen Druckdatensteuerungen, die an den Kommunikationsbus gekoppelt sind, eine Antriebssteuerung der Druckabschnitte und des Druckmediumbewegungsabschnitts durch die Antriebssteuerung auf Basis der empfangenen Dateneinstellungsbeendigung für jede aller Druckfarben durchgeführt wird.

## Revendications

1. Appareil d'impression (150) comprenant :
une pluralité de sections d'impression (10) associées chacune à une couleur correspondante de couleurs d'impression d'encres utilisées dans l'appareil d'impression et configurées pour décharger une encre correspondante des encres sur un support d'impression (5) pour exécuter un processus d'impression ;
une section de déplacement de support d'impression (20) configurée pour déplacer le support d'impression par rapport aux sections d'impression ;
un contrôleur de commande (30R) configuré pour contrôler la commande des sections d'impression et de la section de déplacement de support d'impression ;
une pluralité de contrôleurs de données d'impression (30C-30K) configurés chacun, pour chacune des couleurs d'impression, pour générer des données d'impression d'une seule couleur sur une base d'un ensemble de données d'impression de couleurs complètes associé à une image, une cible d'impression, et définir un ensemble de données d'unité d'impression résultant de la division de l'ensemble de données d'impression d'une seule couleur, dans une section correspondante des sections d'impression ; et
un bus de communication (60) couplé au contrôleur de commande et aux contrôleur de données d'impression pour fournir une communication d'informations,
**caractérisé en ce que**, afin de combiner les processus d'impression, exécutés par chacune des sections d'impression en utilisant l'ensemble de données d'unité d'impression, pour réaliser l'impression de l'image, une paire de deux processus séquentiels sont réalisés de manière répétée, un processus précédent des deux processus séquentiels étant un processus où, à l'achèvement de la définition, pour chacune des couleurs d'impression, de l'ensemble de données d'unité d'impression dans la section correspondante des sections d'impression, le contrôleur de données d'impression transmet un élément d'information d'achèvement de définition de données au contrôleur de commande via le bus de communication, un processus subséquent des deux processus séquentiels étant un processus où, à la réception de l'élément d'information d'achèvement de définition de données pour chacune de l'ensemble des couleurs d'impression de tous les contrôleurs de données d'impression, couplés au bus de communication, le contrôleur de commande contrôle la commande des sections d'impression et de la section de déplacement de support d'impression sur une base de l'élément d'achèvement de définition de données pour chacune de l'ensemble des couleurs d'impression.

2. Appareil d'impression selon la revendication 1, dans lequel un protocole Internet/contrôle de transmission (TCP/IP) est utilisé en tant que protocole de communication pour la communication d'informations fournie par le bus de communication.

3. Procédé d'impression pour un appareil d'impression (100), comprenant :
l'exécution, par chacune des sections d'impression (10) associées chacune à une couleur correspondante de couleurs d'impression d'encres utilisées dans l'appareil d'impression, d'un processus d'impression en déchargeant une encre correspondante des encres sur un support d'impression (5) ;
le déplacement, par une section de déplacement de support d'impression (20), du support d'impression par rapport aux sections d'impression ;
le contrôle de commande, par un contrôleur de commande (30R), des sections d'impression et de la section de déplacement de support d'impression ;
pour chacune des couleurs d'impression, la génération, par des contrôleurs de données d'impression (30C-30K), de données d'impression d'une seule couleur sur une base d'un ensemble de données d'impression de couleurs complètes associé à une image, une cible d'impression, et la définition, par les contrôleurs de données d'impression, d'un ensemble de données d'unité d'impression résultant de la division de l'ensemble de données d'impression d'une seule couleur, dans une section correspondante des sections d'impression ; et
la réalisation d'une communication d'informations entre le contrôleur de commande et les contrôleurs de données d'impression via un bus de communication couplé au contrôleur de commande et aux contrôleurs de données d'impression,
**caractérisé en ce que**, afin de combiner le processus d'impression, exécuté par chacune des sections d'impression en utilisant l'ensemble de données d'unité d'impression, pour réaliser l'impression de l'image, une paire de deux processus séquentiels sont réalisés de manière répétée, un processus précédent des deux processus séquentiels étant un processus où, à l'achèvement de la définition, pour chaque couleur d'impression, de l'ensemble des données d'unité d'impression dans la section correspondante des sections d'impression, un élément d'information d'achèvement de définition de données est transmis par les contrôleurs de données d'impression au contrôleur de commande via le bus de communication, un processus subséquent des deux processus séquentiels étant un processus où, à la réception de l'élément d'information d'achèvement de définition de données pour chacune de l'ensemble des couleurs d'impression de tous les contrôleurs de données d'impression, couplés au bus de communication, le contrôle de commande des sections d'impression et de la section de déplacement de support d'impression est réalisé par le contrôleur de commande sur une base de l'élément d'achèvement de définition de données reçu pour chacune de de l'ensemble des couleurs d'impression.
